# DEMANDE DE BREVET EUROPEEN

(11) **EP 0 570 309 A1**
(43) Date de publication de la demande: **18.11.1993**
(21) Numéro de dépôt: 93420193.0
(22) Date de dépôt: 13.05.1993
(51) Int. Cl.: H02H 1/00, H02J 13/00, H02H 7/24

(54) **Procédé pour la télé-détection des défauts de fonctionnement des parafoudres montés sur les lignes électriques de distribution**

(30) Priorité: 15.05.1992 FR 9206157
(71) Demandeur: SOCIETE INDUSTRIELLE DE MATERIEL ELECTRIQUE SIMEL, F-21220 Gevrey Chambertin (FR)
(72) Inventeur: Mainier, Louis, F-21000 Dijon (FR)
(74) Mandataire: Monnier, Guy

(57) **Abrégé**

Le procédé consiste à associer à chaque parafoudre (5) de la ligne un générateur autonome de signal qui est agencé pour émettre, à la suite de l'apparition d'un défaut au niveau de ce parafoudre, un signal particulier à une fréquence différente de la fréquence nominale de la ligne, et à assurer le transfert de ce signal par les fils de ligne ou par la terre jusqu'à un poste central (1) apte à analyser le signal reçu de chaque générateur.

## Description

La présente invention a trait aux parafoudres qui équipent les lignes électriques de distribution à moyenne tension destinées à l'alimentation des réseaux d'utilisation.

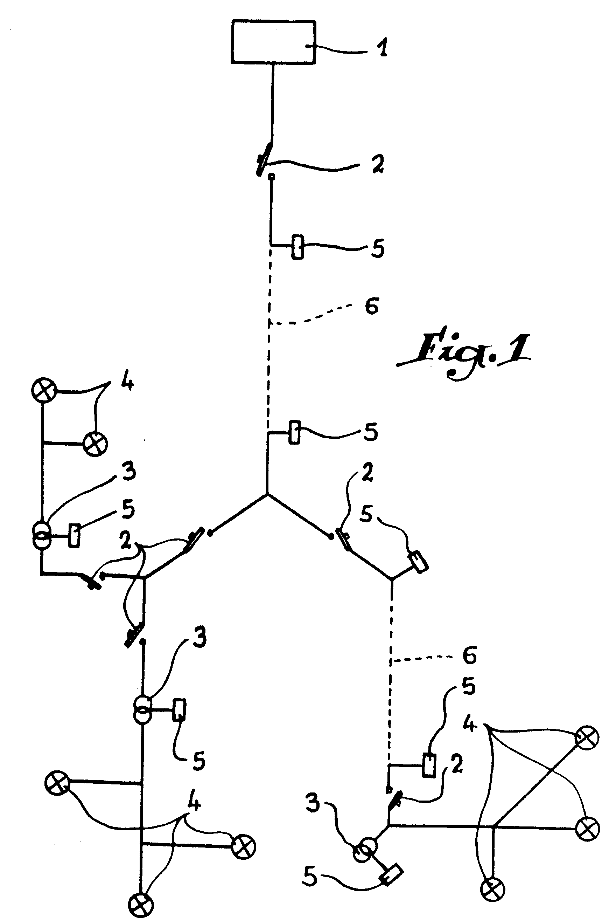

On sait que le nombre des parafoudres montés sur une même ligne est très élevé. Ainsi qu'on l'a très schématiquement illustré à la fig. 1 du dessin annexé aux présentes, laquelle est un schéma très partiel du tracé d'une ligne classique, un poste source 1 alimente, à travers des disjoncteurs-sectionneurs 2, une série de transformateurs 3 dont chacun est relié à un ou plusieurs utilisateurs 4. Trois parafoudres 5 sont associés à chacun de ces transformateurs 3 ; en outre trois parafoudres 5 sont encore prévus à chacune des extrémités des portions souterraines 6 de la ligne.

Pour la réalisation des parafoudres 5, on a à l'heure actuelle généralement recours à des pastilles céramiques d'oxyde de zinc (ZnO) ou de carbure de silicium, qui sont empilées sous pression entre deux électrodes de connexion prévues aux extrémités d'une enveloppe isolante de contention. Or l'expérience a démontré que la durée de vie d'un tel parafoudre est limitée par la céramique elle-même, laquelle devient conductrice après avoir encaissé un trop grand nombre de coups de foudre. Le parafoudre est alors à L'origine d'un courant de fuite même dans les conditions normales de courant et de tension, ce qui évidemment ne peut être toléré par l'exploitant.

Ce dernier est en conséquence confronté à deux problèmes, à savoir d'une part la détection de l'apparition, sur la ligne, du défaut provoqué par un parafoudre défaillant, d'autre part l'identification exacte de ce parafoudre défaillant en vue de son remplacement.

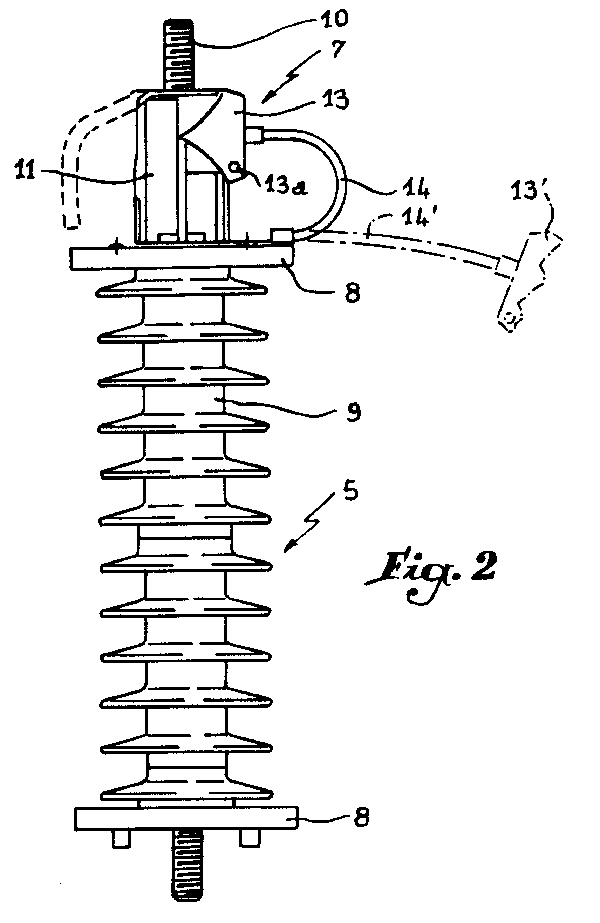

Actuellement la détection du défaut sur la ligne est opérée par repérage du courant de court-circuit. Pour le second probleme relatif à L'identification du parafoudre défaillant, on a proposé de doter les appareils d'un dispositif dénommé de signalisation de défaut 7 qui permet à un observateur situé à au plus 30 mètres de désigner visuellement le parafoudre qui est en défaut. A la manière illustrée à la fig. 2 du dessin annexé, un tel signalisateur 7 est fixé à l'une des platines d'extrémités 8 prévues de part et d'autre de l'enveloppe isolante 9 du parafoudre 5 pour supporter les pièces 10 qui assurent la connexion de l'appareil à l'une des phases de la ligne et à la terre. L'une de ces pièces 10 est donc fixée au corps 11 du signalisateur 7, lequel est pourvu d'un élément éjectable 13 relié par une tresse souple 14 à ladite platine 8.

En utilisation normale, l'ensemble 13-14 assure la jonction entre la pièce 10, qu'on supposera reliée à l'une des phases de la ligne à protéger, et l'empilage de pastilles céramique renfermé par l'enveloppe 9. Si la foudre tombe sur la phase envisagée, la surtension s'applique à l'empilage précité à travers l'ensemble 13-14. Si cet empilage est défaillant, le courant de fuite provoque la mise à feu d'une petite charge explosive logée dans le corps 11 du signalisateur 7, ce qui a pour effet d'expulser latéralement l'élément 13, l'ensemble 13-14 précité affectant alors la position qui a été représentée en 13'-14' .

Un tel système est avantageux, puisqu'il permet l'identification du parafoudre qui est en défaut moyennenant observation visuelle de la position de l'ensemble 13'-14'

En outre il oblige l'exploitant de la ligne à procéder eu remplacement du parafoudre défectueux avant la remise sous tension de ladite ligne.

Toutefois , à ces avantages correspond un inconvénient sensible, lié au fait que la signalisation de défaut entraine une coupure de longue durée (temps nécessaire à un observateur pour le contrôle visuel de l'ensemble des parafoudres de la ligne) privant les utilisateurs du service attendu.

C'est à ce problème de l'indication de défaut des parafoudres équipés de signalisateurs-déconnecteurs que la présente invention entend apporter une solution, et ce en ayant recours à un système de transmission d'informations par courants porteurs sur ligne d'énergie.

L'invention a pour objet le procédé de télé-détection qui est défini à la revendication 1.

En fait elle consiste essentiellement à associer à chaque parafoudre ou groupe de parafoudres à signalisateur-déconnecteur d'une même ligne de distribution, un générateur autonome de signal qui est agencé pour émettre, à la suite de l'apparition du défaut au niveau du parafoudre ou de l'un des parafoudres du groupe considéré, un signal particulier à une fréquence différente de la fréquence nominale de la ligne, et à assurer le transfert de ce signal par les fils de phase de la ligne et, éventuellement, par la terre.

En ce qui concerne la structure du générateur de signal, on se reportera à la Demande de Brevet européen déposée ce même jour au nom de la présente Demanderesse pour "Générateur de signal pour la télé-détection des défauts de fonctionnement des parafoudres montés sur les lignes électriques de distribution". On se contentera de mentionner que ce générateur est alimenté par le courant qui parcourt la ligne protégée, de sorte qu'il dispose d'une autonomie totale, sans avoir recours à une source de puissance indépendante et à des systèmes à quartz toujours délicats.

Dans tous les cas, l'information constituée par le signal généré au niveau d'un parafoudre ou d'un groupe de parafoudres est transmis jusqu'au poste-source de la ligne, lequel est bien entendu agencé pour recevoir et analyser les signaux susceptibles d'être reçus des différents générateurs montés sur la ligne de distribution considérée. Ce poste-source, faisant ainsi fonction de "central", comporte des moyens aptes à assurer l'identification exacte de chaque générateur de la ligne.

On peut distinguer deux familles de systèmes selon que le parafoudre est maître ou esclave.

Dans le premier cas, c'est le générateur attaché au parafoudre défectueux qui émet sur la ligne le signal de défaut, et dans l'autre cas, c'est le poste central qui scrute la ligne à laquelle il est relié, interrogeant chacun des générateurs les uns après les autres ; en cas de réponse d'un de ces derniers, le poste central saura automatiquement lequel des parafoudres est défectueux.

L'intérêt de cette deuxième solution réside dans le fait que le poste central peut procéder à un examen périodique de la ligne du réseau, à des fins de maintenance, qu'il peut tester l'état des parafoudres d'une branche de cette ligne jusqu'alors déconnectée et qui vient d'être remise sous tension, et qu'il peut enfin différer l'examen de l'état de la ligne après la fin d'un orage, afin de diminuer le brouillage provenant du bruit électromagnétique.

De plus, cette seconde solution permet une plus grande facilité de codage et une diminution de la circulation de signaux sur la ligne puisqu'il n'y a plus d'exploration systématique, mais simplement une émission en cas de défaut, amenant en particulier une diminution du rayonnement de la ligne.

Quel que soit le principe utilisé -parafoudre maître ou esclave- le signal qui transite sur la ligne doit contenir l'information de la localisation du parafoudre défectueux.

Une première solution consiste à adopter une identification par mesure du temps de vol. Cette méthode consiste à dater les signaux de défaut envoyés par le générateur du parafoudre, ce qui permet, connaissant la vitesse de propagation des ondes, de déterminer la distance séparant l'émetteur et le récepteur. Le principe nécessite au moins deux informations.

Dans le cas de la configuration à parafoudre-maître, on peut ou bien utiliser deux détecteurs situés en deux endroits différents de la ligne, ou bien utiliser un seul détecteur et une extrémité ouverte de la ligne comme deuxième détecteur virtuel réfléchissant le signal. La première possibilité n'est valable qu'en disposant de moyens de réception supplémentaires à ceux déjà présents au poste-sourse puisque la ligne ne forme jamais de boucle et n'est donc jamais reliée à deux postes-sources à la fois. La seconde possibilité n'est pas très aisée à mettre en oeuvre en pratique sur un réseau de distribution très arborescent et pourvu de nombreuses terminaisons libres qui sont autant de sources de réflexions parasites. Le signal reçu risque donc d'être dans ce cas très bruité et difficilement exploitable.

Cette solution prend en fait tout son intérêt dans la configuration à parafoudre-esclave. En effet, on n'a plus besoin, en pareil cas, que d'un seul récepteur puiqu'on connaît l'instant où le signal d'interrogation a été généré. Chaque poste central est donc équipé d'un émetteur, d'un récepteur et d'une horloge.

L'émetteur du poste central envoie un signal sur la ligne. Lorsqu'il arrive sur un parafoudre endommagé, ce signal provoque le déclenchement d'un signal retour, dont la durée de vol permet de connaitre la distance séparant le parafoudre du poste-central. Les réflexions du signal d'interrogation sur les parties ouvertes de la ligne ne risquent pas de brouiller le signal significatif parce que d'une part elles sont de plus faible niveau que le signal émis par le parafoudre, et que d'autre part les signaux réfléchis n'ont pas les mêmes caractéristiques (fréquence, récurrence) que le signal du parafoudre.

L'inconvénient de cette solution réside dans le fait que sur une partie de la ligne, deux parafoudres appartenant à des branches différentes peuvent être situés à la même distance du poste central, ce qui laisse subsister une ambigui'té sur la position du parafoudre défectueux en cas de défaut de l'un des deux.

Une seconde solution consiste à indiquer au poste central la position du parafoudre défectueux, non pas en transportant dans le signal l'information de la position de ce dernier, mais en générant un signal standard à un moment bien précis de la journée, chaque parafoudre émettant à des instants différents. La réception d'un signal standard et la lecture de l'heure de réception permettent alors de retrouver la position du parafoudre en consultant une base de données. Le générateur de chaque parafoudre doit alors nécessairement être synchronisé avec les moyens de mesure fixes du poste central, ce qui nécessite le recours à une horloge (qui peut être la fréquence du secteur) et à une procédure de synchronisation, en particulier pour les tronçons remis sous tension après une période de déconnexion.

Bien entendu, ce principe ne peut fonctionner qu'en configuration à parafoudre-maître.

Une troisième solution consiste à caractériser le parafoudre par le contenu du signal. Il s'agit alors d'un codage.

Dans la configuration à parafoudre-maître, le générateur du parafoudre défectueux envoie sur la Ligne un signal caractéristique de ce parafoudre. On peut recourir à un codage analogique ou numérique, étant observé que le codage analogique est très sensible aux bruits et aux distorsions alors que le codage numérique y est quasi-insensible.

Le générateur de chaque parafoudre émet une séquence de bits bien particulière. Elle peut être par exemple constituée de signaux de 1kV d'amplitude émis au sommet d'une impulsion de 50 Hz, et répétée toutes les n périodes du 50 Hz. La présence d'une impulsion est associée au bit 1 alors que son absence est associée au bit 0. La période séparant deux bits est ou bien connue par le poste central (quelques dizaines ou quelques centaines de kilkohertz), ou bien indiquée par quelques bits de "calage" émis systématiquement en début de signal, toutes les n périodes, ou durant les impulsions à 50 Hz ne transportant pas le signal (n-1 impulsions).

Afin de débruiter le récepteur des parasites récurrents qui encombrent parfois les lignes, on peut par exemple émettre, une alternance avant l'impulsion transportant le signal codé, un signal non significatif qui sera ensuite analysé par le poste central.

Il peut se produire qu'en cas de gros orage, plusieurs parafoudres se mettent simultanément en défaut, conduisant à l'émission simultanée de signaux de défaut différents, rendant leur identification impossible. On pallie à cet inconvénient en choisissant pour chaque parafoudre des récurrences n différentes de façon à être certain qu'à un moment donné chaque signal de défaut se retrouvera seul et donc décelable correctement par le poste-central.

Dans la configuration à parafoudre-esclave, deux variantes sont également possibles. La première consiste à coder le signal de défaut : le poste central émet toujours le même signal d'interrogation, mais chaque parafoudre, lorsqu'il est en défaut, envoie, via son générateur, un signal différent. Quand cette technique est utilisée avec en plus une mesure de temps de vol, il n'est pas utile de coder intégralement le réseau (chaque parafoudre a son propre signal), alors qu'il suffit de coder chaque branche (tous les parafoudres d'une même branche ont le même code et envoient donc le même signal). On peut ainsi lever l'ambiguïté qui subistait avec le système à temps de vol.

La seconde variante consiste à coder le signal d'interrogation : le poste central émet des signaux d'interrogation différents selon le parafoudre que l'on veut sonder. On peut aussi interroger sélectivement les branches les unes après les autres quand on mesure en outre le temps de vol.

## Revendications

1. Procédé pour la télé-détection des défauts de fonctionnement des parafoudres montés sur les lignes électriques de distribution, caractérisé en ce qu'il consiste à associer à chaque parafoudre ou groupe de parafoudres d'une même Ligne un générateur autonome de signal qui est agencé pour émettre, à la suite de l'apparition d'un défaut au niveau de ce parafoudre ou de ce groupe, un signal particulier à une fréquence différente de la fréquence nominale de la ligne, et à assurer le transfert de ce signal par les fils de phase de la ligne et, éventuellement, par la terre, jusqu'à un poste central apte à analyser le signal reçu de chaque générateur.

2. Procédé suivant la revendication 1, caractérisé en ce que la décision de la génération du signal est prise au niveau du parafoudre lui-même, le poste central où a lieu l'analyse étant en conséquence esclave du parafoudre.

3. Procédé suivant la revendication 2, caractérisé en ce que la position du parafoudre est déduite de la mesure des instants où le signal est reçu en deux points différents de la ligne, ou de la mesure des instants où le signal et sa réflexion sur une extrémité de la ligne sont reçus au poste central.

4. Procédé suivant la revendication 2, caractérisé en ce que la position de chaque parafoudre est déduite du contenu, convenablement codé, du signal qui renferme la signature particulière du générateur du parafoudre ou l'information de la position de ce générateur.

5. Procédé suivant la revendication 4, caractérisé en ce que le codage est constitué par l'heure à laquelle est établie la transmission du signal, la génération de ce dernier étant alors différée depuis l'instant de l'apparition du défaut jusqu'à l'instant précis qui constitue la caractéristique de chaque parafoudre ou groupe de parafoudres en vue de l'identification de la position de celui-ci.

6. Procédé suivant la revendication 1, caractérisé en ce que la décision de génération du signal est prise au niveau du poste central qui dans ces conditions envoye sur la ligne contrôlée un signal d'interrogation à destination des générateurs de celle-ci et qui reçoit ensuite le signal de réponse émis par le générateur associé aux seuls parafoudres défectueux.

7. Procédé suivant la revendication 6, caractérisé en ce que l'identification du parafoudre défectueux est obtenue en mesurant le temps séparant l'émission du signal d'interrogation et la réception du signal de défaut.

8. Procédé suivant la revendication 6, caractérisé en ce que la position du parafoudre défectueux est renfermée sous forme codée dans le signal de défaut émis par le générateur de chaque parafoudre.

9. Procédé suivant la revendication 6, caractérisé en ce que la position du parafoudre défectueux est renfermée sous forme codée par le signal d'interrogation émis par le poste central, le générateur d'un seul parafoudre de la ligne étant en mesure de réagit à ce code par l'émission d'un signal non codé si ledit parafoudre est en défaut et le poste central explorant l'ensemble de la ligne en émettant successivement les différents signaux d'interrogation codés.

10. Procédé suivant la revendication 6, caractérisé en ce que le signal d'interrogation n'est pas codé tandis que le signal émis par le générateur de chaque parafoudre, pour autant que celui-ci soit en défaut, est codé de sorte que le poste central peut explorer en une seule interrogation l'ensemble des parafoudres.
